(19) Europäisches Patentamt
European Patent Office
Office européen des brevets

(11) EP 1 402 249 B1

(12) **EUROPEAN PATENT SPECIFICATION**

(45) Date of publication and mention
of the grant of the patent:
**05.05.2010 Bulletin 2010/18**

(51) Int Cl.:
***G01N 25/18*** *(2006.01)*   ***G01N 25/48*** *(2006.01)*
***G01N 25/00*** *(2006.01)*

(21) Application number: **01944424.9**

(22) Date of filing: **09.06.2001**

(86) International application number:
**PCT/US2001/018769**

(87) International publication number:
**WO 2002/101371 (19.12.2002 Gazette 2002/51)**

(54) **METHOD FOR MEASURING ABSOLUTE VALUE OF THERMAL CONDUCTIVITY**

VERFAHREN ZUR MESSUNG DES ABSOLUTWERTS DER WÄRMELEITFÄHIGKEIT

PROCEDE DE MESURE DE LA VALEUR ABSOLUE DE LA CONDUCTIVITE THERMIQUE

(84) Designated Contracting States:
**DE FR GB IT**

(30) Priority: **08.06.2001 US 877390**

(43) Date of publication of application:
**31.03.2004 Bulletin 2004/14**

(73) Proprietor: **PerkinElmer Health Sciences, Inc.
Waltham, MA 02451 (US)**

(72) Inventors:
• **MERZLIAKOV, Mikhail
18106 Rostock (DE)**
• **SCHICK, Christoph
18106 Sanitz (DE)**

(74) Representative: **Weller, Wolfgang et al
Witte, Weller & Partner
Patentanwälte
Postfach 10 54 62
70047 Stuttgart (DE)**

(56) References cited:
**US-A- 4 255 961      US-A- 5 005 985
US-A- 5 099 441      US-A- 5 224 775
US-A- 5 335 993      US-A- 5 439 291
US-A- 5 667 300      US-A- 5 688 049
US-A- 5 711 604      US-A- 5 842 788
US-A- 6 142 662      US-B1- 6 170 984
US-B1- 6 200 022**

**Description**

The present invention relates to a method of using Differential Scanning Calorimetry ("DSC") to measure the thermal conductivity of materials. The present invention particularly relates to a method according to the preamble of claim 1.

A method according to the preamble of claim 1 is known from US 5 335 993 1.

Thermal conductivity characterizes the ability of a material to conduct heat. Traditional methods for measuring the thermal conductivity of materials comprise imposing a temperature gradient upon a material of known geometry, and measuring the heat flow through the material. The heat flow is measured by, for example, measuring the temperature drop across a sheet of material having a known thermal conductivity. Traditional methods of measuring thermal conductivity are limited in that they assume that thermal contact of a sample is highly reproducible and determinable from a calibration measurement. The present invention overcomes this limitation by using a simultaneous thermal contact measurement. No method has been heretofore proposed to determine the actual thermal contact and the thermal conductivity simultaneously from a single measurement of a heat capacity spectrum.

Thermal conductivity data are in great demand by industry, for use in polymer injection molding, in encapsulation of electronic devices and, in general, in modeling of different processes. Nowadays commercial techniques often measure thermal diffusivity or effusivity and calculate thermal conductivity using heat capacity values, measured separately.

DSC is a commercially available and widely used technique to measure heat capacity of samples of milligram size in a wide temperature range. Therefore it would be opportune to add to DSC instruments a feature to measure thermal conductivity of typical DSC samples.

Prior art of interest includes P. G. Knibbe, J. Phys. E: Sci. Instrum., vol. 20, pp. 1205-1211 (1987) which describes a "hot wire" technique for measuring the thermal conductivity of a material. This technique uses a temperature-sensitive resistor wire embedded in a sample of the material. The resistor wire serves the dual function of supplying heat to the specimen, and measuring the temperature change at the wire. This rate of change is related to the thermal conductivity of the sample of the material.

D. G. Cahill and R. O. Pohl, Phys. Rev. B. vol. 35, p. 4067 (1987), and D. G. Cahill, Rev. Sci. Instrum. vol. 61 (2), pp. 802-808 (1990), describe a "3ω" technique for measuring thermal conductivity. This technique uses a temperature sensitive resistive metal film evaporated as a narrow line onto the surface of the sample to simultaneously heat the sample and detect the flow of heat away from the metal line. A current at angular frequency w heats the metal line at a frequency of 2 ω. Because the resistance of a metal increases with increasing temperature, and this temperature is modulated by the sample thermal conductivity, this produces a small oscillation in the resistance of the metal line, resulting in a voltage across the resistor at a frequency of 3 ω. The thermal conductivity of the sample is then calculated from the amplitude of the 3ω voltage oscillations.

J. H. Flynn and D. M. Levin, Thermochimica Acta, vol. 126, pp. 93-100 (1988), describes a thermal conductivity measurement method, suitable for measuring the thermal conductivity of sheet materials, based upon first-order transitions in a sensor material. A film of the sensor material is placed on a surface of the sheet material. The thermal conductivity measurement is made at the temperature at which the sensor material undergoes a first order transition. For example, if indium is used as the sensor material, the measurement is made at the melting point of indium, i.e., at the temperature at which indium undergoes a first order transition. The flow of heat into the sensor material must match the transition enthalpy. The thermal conductivity of the sheet material is obtained by comparing the data obtained with only the sensor material in the heater of a differential scanning calorimeter, to the data obtained with the sensor material on top of the sheet material in the differential scanning calorimeter.

T. Hashimoto, Y. Matsui, A. Hagiwara and A. Miyamoto; Termochimica Acta vol. 163, pp. 317-324 (1990), describes a method to obtain thermal diffusivity by an AC calorimetric method. The AC current is passed through the heater, the periodical heat flow generates and diffuses to the rear surface of the sample. The variation of the temperature at the rear surface was detected. A sputtered gold layer on both surfaces was used as the heater and the sensor of temperature variation. The thermal diffusivity of four polymers were measured over the temperature range 20 - 200 °C.

S.M. Marcus and R. L. Blaine, Thermochimica Acta, vol. 243, pp. 231-239 (1994) (see also US 5 335 993 A) describes a thermal conductivity measurement method where thermal conductivity is measured without modification of the commercially available DSC cell. A calculation of thermal conductivity is determined from a ratio of apparent and true heat capacities measured from a thick (about 3mm) and a thin (about 0.5mm) sample, respectively, in temperature-modulated mode. An additional calibration step takes heat losses through the purge gas surrounding into account. This method is based on the assumption that the face of the specimen at the heat source follows the applied temperature modulation, which means no thermal resistance between the sample and the furnace.

S.L Simon and G.B. McKenna, J. Reinforced Plastics Composites, vol. 18, pp. 559-571 (1999) describes two problems in the aforesaid method of Marcus and Blaine. First, the equation relating the apparent heat capacity to the thermal conductivity is limited in range due to an approximation made in their derivation. Second, a thermal resistance between the sample and the furnace can have significant effect on the measured apparent heat capacity. This reference also teaches that when calculating a value for thermal conductivity it is necessary to know the heat transfer coefficient, for without it, an accurate value cannot be obtained.

S.L. Simon and G.B. McKenna, J. Reinforced Plastics Composites, vol. 18, pp. 559-571 (1999), as well as U.S. Patent No. 5,335,993 to Marcus et al., additionally describe a method of determining thermal conductivity by obtaining the value from a single run at several frequencies, i.e. it is not necessary to measure two samples. In U.S. Patent No. 5,335,993 the method described therein has insufficient sensitivity, in part; because it measures the conductivity of massive bodies brought into thermal contact with thin film wafers and does not fully eliminate interface thermal resistance. The basic problem with this patent as well as S.L. Simon and G.B. McKenna, J. Reinforced Plastics Composites, vol. 18, pp. 559-571 (1999), is that the actual thermal contact between sample and oven is not considered in the calculation of thermal conductivity. Theses references teach that thermal contact is considered to be highly reproducible and determined from the calibration measurement.

U.S. Pat. No. 5,244,775 to Reading et al, and U.S, Pat No. 5,439,291 to Reading utilize frequency measurement resulting from the application of heat to determine phase transition of materials.

U.S. Pat. No. 5,439,291 to Reading describes a technique for determining physical properties of a sample using thermal modulation techniques. Two identical samples are used, with one experiencing a linear temperature ramp and the other experiencing the same ramp with a temperature oscillation imposed. A chopped light source can be used to provide the energy necessary for the temperature oscillation. Thermocouples attached to each sample measure the temperature of each sample. Light is used as a radiation source to heat the temperature-modulated sample.

Of interest is 5,688,049 to Gorvorkov, which teaches a device and method for measuring the thermal conductivity of a thin film by determining the change in temperature near the surface of the film after a sample including the film is illuminated with a beam of light. This method is accomplished by modulating the beam of light at a selected modulation frequency and measuring the amplitude of the sound waves created in the gas near the surface of the sample as a result of the repetitive heating and cooling of the surface.

These techniques are all subject to significant limitations. For example, the hot wire technique requires large samples, long times for the sample to come into equilibrium, and an additional long measurement period. The AC and the 3w techniques require a thin metal film in intimate contact with the sample, with fine electrical contacts to the film. The metal film must be thermally isolated from any heat sink, except for the sample being measured. The combination of film and sample is not mechanically robust, and is not readily separable so that other samples can be measured. The first order transition technique is restricted to the temperatures where materials are available with sharp first order transitions.

Accordingly, it is desirable to provide a simple, rapid and nondestructive technique for measuring the thermal conductivity of low thermal conducting solid materials, particularly one that is sensitive enough to measure the conductivity of materials with K in the range of 0.1-2 W m-1 K-1, and is suitable for on-line control in an industrial production setting and overcomes other drawbacks of the prior art. Since thermal contact cannot be reproduced an improved method to determine the actual thermal contact and the thermal conductivity simultaneously from the heat capacity spectrum from a single measurement is disclosed. No thermal conductivity calibrant is necessary.

The present method determines effective heat capacity $C_{eff}(\omega)$ at different frequencies calculated using a novel step response analysis as a ratio of heat flow rate amplitude AHF and heating rate amplitude Aq. With this model one can thoroughly describe the dynamic behavior of DSC and temperature modulated DSC (TMDSC) systems under conditions of an appreciable temperature gradient inside the sample. A novel algorithm to determine the most important parameters: sample heat capacity, effective thermal contact between the sample and the furnace and finally sample thermal conductivity for the case of real valued heat capacity and thermal conductivity is disclosed.

The present invention provides for quick measurements of small samples for thermal conductivity and heat capacity of the sample are determined simultaneously in a single measurement with the prerequisite that these values are frequency independent. The method is appropriate for state-of-the art power-compensated differential scanning calorimeters without any modification of the measuring system.

Definitions

"Thermal conductivity," as used herein, is the ratio of the heat flow per unit area in the sample to the temperature gradient in the sample.

"Specific heat," as used herein, is the ratio of the change in heat content of a sample of uniform temperature to the product of the change in temperature of the sample and mass of the sample.

"Effective heat capacity," as used herein, is the ratio of the amplitude of the heat flow into a sample to the amplitude of the heating rate applied to the sample at the heat source.

"Thermal contact," as used herein, is the ratio of the heat flow through the sample bottom surface to the temperature difference between furnace and sample.

"Step response analysis", as used herein, is the measurement of heat flow rate and heating rate in time domain.

The method according to the invention is defined by the features of claim 1.

The present invention uses known DSC equipment to provide novel techniques for measuring the thermal conductivity of low thermal conducting solid materials, particularly one that is sensitive enough to measure the conductivity of materials with thermal conductivity in the range of about 0.1 W m$^{-1}$ K$^{-1}$ to about 2 W m$^{-1}$ K$^{-1}$.

A system exists in a furnace system where:

| | |
|---|---|
| $S$ | contact area |
| $C_p$ | specific heat capacity of the sample |
| $\rho$ | sample density |
| $\kappa$ | thermal conductivity of the sample |
| $d$ | sample effective thickness (half of the actual thickness for a sample sealed in a pan) |
| $T_s(x,t)$ | sample temperature |
| $Tp(t)$ | pan temperature |
| $T_o(t)$ | furnace temperature |
| $K_{ps}$ | thermal contact between pan and sample |
| $K_{op}$ | thermal contact between furnace and pan |
| $\Phi_p(t)$ | heat flow rate into the sample |
| $\Phi_o(t)$ | heat flow rate into the pan-sample system |

It is the object of the present invention to teach a method to determine simultaneously thermal conductivity, the thermal contact and heat capacity of low thermal conducting materials like polymers. No additional measurements, no thermal conducting calibrants, and no modifications of the commercially available DSC are necessary.

It is the object of the present invention to provide a method based on temperature waves propagation through the sample. At low frequencies of perturbation temperature waves go through whole sample without damping, the whole sample is modulated and, therefore, large effective heat capacity is measured. At higher frequencies, temperature waves are damped and the sample is modulated only partly. Thus, measured effective heat capacity is smaller. The damping is stronger for poor thermal conducting materials.

It is the object of the present invention to provide a method, which overcomes the disadvantage of known techniques for measuring thermal contact.

It is the object of the present invention to provide a method, which determines the actual thermal contact and the thermal conductivity simultaneously from a heat capacity spectrum from a single measurement. No thermal conductivity calibrant is necessary.

It is the object of the present invention to provide a method for measuring thermal conductivity where heat capacity of the sample is measured at different frequencies. Low frequency temperature waves go through the whole sample without damping, the whole sample is modulated and therefore, a large apparent heat capacity is measured. Higher frequency temperature waves are damped and the sample is partly modulated -the measured apparent heat capacity is smaller. The damping is stronger for poor thermal conducting materials. However, the same damping effect appears by finite thermal contact (heat transfer coefficient) between the sample surface and the furnace - a poor thermal contact damps the temperature waves more strongly than a good one. But the thermal contact and thermal conductivity lead to different frequency dependencies of apparent heat capacity. This difference allows the necessary separating of damping effects due to the thermal contact and due to the thermal conductivity. Moreover, it is not necessary to measure apparent heat capacity at different frequencies with TMDSC. The spectrum of temperature waves can be easily generated by a single step in the program temperature.

In the preferred embodiment of this invention, known DSC apparatuses are utilized, and may be simplified to cases where a solid sample is measured directly in a DSC furnace. Three parameters need to be determined: specific heat capacity; effective thermal contact between the sample and the furnace (K), and thermal conductivity (K).

It is the object of the present invention to provide a method of measuring thermal conductivity of a sample where effective heat capacity $C_{eff}(\omega)$ at different frequencies can be calculated from step response analysis as a ratio of heat flow rate amplitude $A_{HF}$ and heating rate amplitude $A_q$:

$$C_{eff}(\omega) = \frac{A_{HF}}{A_q} = \frac{\sum_{i=1}^{n} HF_i \cos(\omega t_i) - i \sum_{i=1}^{n} HF_i \sin(\omega t_i)}{\sum_{i=1}^{n} q_i \cos(\omega t_i) - i \sum_{i=1}^{n} q_i \sin(\omega t_i)} \tag{1}$$

where points of heat flow rate, $HF_i$, and heating rate, $q_i$, should be taken both with the same sampling rate(number of points per unit time). Points are collected from the beginning of the temperature step until the heat flow reaches the steady state value at the isotherm, having in total $n$ points. After that the $C_{eff}(\omega)$ values are corrected for apparatus influence (instrumental delay) as:

$$C_{app}(\omega) = C_{eff}(\omega) \cdot B_2(\omega) \tag{2}$$

where $C_{app}(\omega)$ is an apparent heat capacity at frequency $\omega$, and $B_2(\omega)$ is the dynamic calibration factor of the instrument.

It is the object of the present invention to provide a method of measuring thermal conductivity where the first parameter of the system, the specific heat capacity $c_p$, can easily be determined as

$$c_p = \frac{C_{eff}(0)}{m_s} \tag{3}$$

where $m_s$ is the sample mass and $C_{eff}(0)$ is calculated from Eg. (1) for $\omega = 0$.

It is the object of the present invention to provide a method of measuring thermal conductivity where apparent heat capacity is given as

$$C_{app}(\omega) = \frac{C_\alpha(\omega)}{1 - \frac{i\omega}{K}C_\alpha(\omega)} \tag{4}$$

where $C_\alpha(\omega)$ is the apparent heat capacity in a case of ideal thermal contact between the sample and the furnace. Apparent heat capacity is measured directly on the bottom surface of the sample.

Equation (4) from above can be re-written as:

$$C_\alpha(\omega) = \frac{C_{app}(\omega)}{1 + \frac{i\omega}{K}C_{app}(\omega)} \tag{5}$$

Unknown parameter in Eq.(5) is $K$ because $C_{app}(\omega)$ is measured by DSC. The lower the frequency $\omega_k$ the larger the modulus of $C_{app}(\omega_k)$ and $C_\alpha(\omega_k)$.

It is the object of the present invention to provide a method of measuring thermal conductivity where the second parameter (effective thermal contact of said sample) of the system is determined by describing $C_\alpha(\omega)$ on a solid curve. The theoretical $C_\alpha(\omega)$ curve in a polar plot representation depends only on the value $C_\alpha(\omega)=0)$, that is sample true heat capacity $c_p \cdot m_s$, and does not depend on all other parameters. The correct value for $K$ is then the value at which all $C_\alpha(\omega_k)$ points, calculated by Eq.(5), lie on the theoretical curve.

It is the object of the present invention to provide a method of measuring thermal conductivity where sample thermal conductivity $\kappa$ is readily determined.

$$C_\alpha(\omega) = -\frac{1}{i\omega}\kappa \cdot S \cdot \alpha \tanh(\alpha \cdot d) \tag{6}$$

where all measured parameters, except thermal conductivity $\kappa$, are known (density $\rho$ can be calculated from the sample mass and sample size, which are set before measurement), At any given frequency $\omega_k \neq 0$ increasing of $\kappa$ leads to shifting the position of the $C_\alpha(\omega_k)$ point on the theoretical curve towards $C_\alpha(\omega = 0)$.

It is the object of the present invention to provide a method of measuring thermal conductivity where by varying $\kappa$ in

$$C_\alpha(\omega) = -\frac{1}{i\omega} \kappa \cdot S \cdot \alpha \tanh(\alpha \cdot d) \qquad\qquad (6)$$

the condition is reached where the same set of $\omega_k$ calculated $C_\alpha(\omega_k)$ points coincide with measured points $C_\alpha(\omega_k)$, determined by Eq.(5).

The measured points for $C_\alpha(\omega_k)$ will not exactly coincide with theoretical ones, rather a scatter corresponding to only about 1 to about 2 percent uncertainties in determination of thermal conductivity ($\kappa$) and effective thermal contact ($K$) is produced.

In the drawings :

Fig. 1(a) and 1(b) are a schematic view of the furnace (a) and its block diagram (b).

Fig 2(a) shows heating rate $q(t)$ as a delta function and the corresponding heat flow rate HF(t) for periodic heating rate (part a); Fig 2(b) shows a single heating rate pulse; Fig. 2(c) shows a single heating rate pulse, which can be followed by another pulse after the time interval $t_p'$ or $t_p''$.

Fig. 3 shows a polar plot of $C_{app}(\omega_k)$ and $C_\alpha(\omega_k)$ for effective thermal contact $K$. The horizontal and vertical axes show the real and imaginary parts, respectively. Solid curve is theoretical values of $C_\alpha(\omega)$ for given $C_\alpha(\omega = 0)$.

Fig. 4 shows a polar plot of $C_\alpha(\omega_k)$, measured and calculated for different values of thermal conductivity $\kappa$. The horizontal and vertical axes show the real and imaginary parts, respectively.

Fig. 5 shows a polar plot of $C_\alpha(\omega k)$, calculated with optimal parameter $\kappa$ and measured. The horizontal and vertical axes show the real and imaginary parts, respectively.

Fig. 6 shows a temperature-time program, consisting of 2 K steps in temperature and 30 s isotherms. Temperature steps were programmed as short heating segments with 150 K min-1 heating rate.

Fig. 7 shows an example of measured heat flow rate HF versus time which corresponds to the temperature-time program, shown in Fig. 4. The last peak was taken for further data evaluation.

Fig. 8 shows a polar plot of $C_\alpha(\omega_k)$, measured and calculated, for PS disks with thickness 1.03 mm (a) and 0.44 mm (b). The horizontal and vertical axes show the real and imaginary parts, respectively.

Fig. 9 shows a polar plot of $C_\alpha(\omega_k)$, measured and calculated, for PMMA disks with thickness 0.46 mm (a) and 1.052 mm (b). The horizontal and vertical axes show the real and imaginary parts, respectively. In part (b) $C_\alpha(\omega_k)$ values are shown for two different effective thermal contacts $K = 0.035$ W K-1 and $K = 0.11$ W K-1 and slightly different $c_p$.

Fig. 10 shows a polar plot of $C_\alpha(\omega_k)$, measured and calculated, for Epoxy Resin 160 disk with 1.131 mm thickness. The horizontal and vertical axes show the real and imaginary parts, respectively.

Fig. 11 shows a polar plot of $C_\alpha(\omega_k)$, measured and calculated, for Epoxy Resin 4173. The horizontal and vertical axes show the real and imaginary parts, respectively. Two different sets of parameters $\kappa$ and $K$($\kappa$=1.85 W m-1 K-1, K = 0.12 W K-1 (a) and $\kappa$ = 1.7 W m-1 K-1, $K$ = 0.13 W K-1 (b)) describe the measured points with the same quality.

Fig. 12 shows a polar plot of $C_\alpha(\omega_k)$ for a PMMA disk. The horizontal and vertical axes show the real and imaginary parts, respectively. $C_\alpha(\omega_k)$ values, measured at high frequencies ($\omega_7$ to $\omega_{10}$), are uncertain.

Fig. 13 shows a polar plot of $C_\alpha(\omega_k)$ for PS (a) and PMMA (b) disks. The horizontal and vertical axes show the real and imaginary parts, respectively. Measured and calculated values do not coincide simultaneously for the whole set of frequencies $\omega_k$.

The present invention resides in control methods for conventional differential analytical apparatus, and is an improvement on the methods currently practiced to control such conventional differential analytical apparatus.

The following detailed description of the present invention applies specifically to differential scanning calorimetry (DSC), in which temperature is the driving variable and heat flow is the characterizing differential physical parameter. However, although the present invention is described as applied to differential scanning calorimetric analysis, it should be understood that the present invention could be used with any differential thermal analysis method including Pressure Differential Scanning Calorimetry, Differential Thermal Analysis, Pressure Differential Thermal Analysis, Differential Photocalorimetry, Pressure Differential Photocalorimetry, Differential Thermogravimetry, and Pressure Differential Thermogravimetry, as well as any combination of these techniques. The principles and methods described herein with reference to differential scanning calorimetric analysis could be applied to any and all of the thermal analytical methods listed above, as well as to other analytical methods wherein a characterizing differential physical parameter is measured as a function of a driving variable.

<u>The System</u>

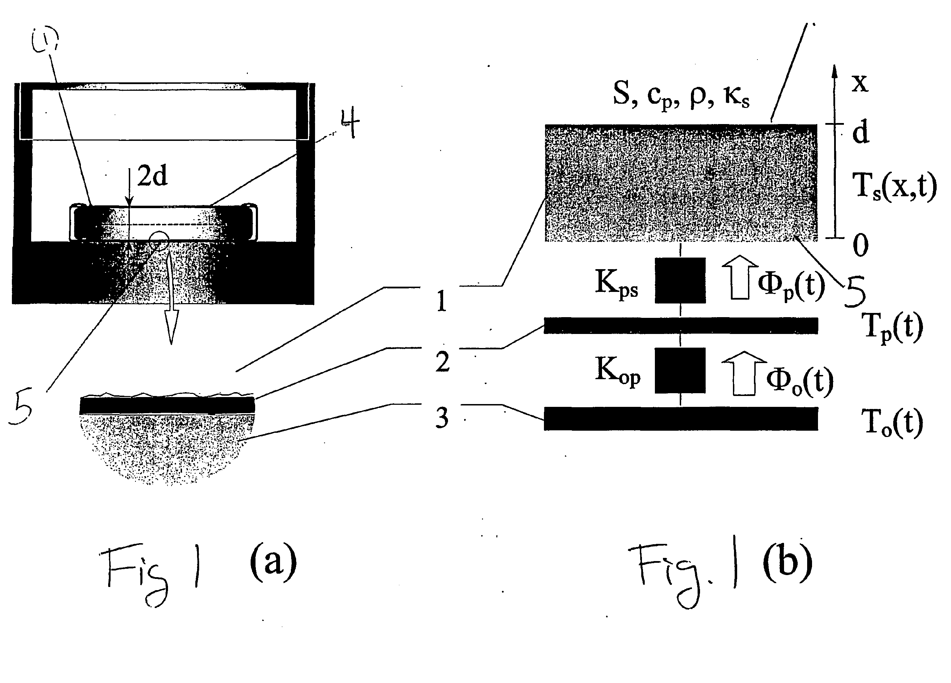

FIG. 1a is a schematic representation of the present invention as it may be used with known Differential Scanning Calorimetry (DSC)(3), for example, Perkin-Elmer Pyris-1 DSC. Differential scanning calorimeter furnace (3) consists of a sample (1) which is preferably in disc formation, and a grease layer (2). Sample (1) may be any type of sample, however the present invention is appropriate for low thermal conducting solid materials, for examples polymers. Low thermal conducting means a material has a thermal conductivity value K in the range of about 0.1 -2 W m-1 K-1. Typical polymers include polystyrene, poly(methyl methacrylate), and epoxy resins. Grease layer (2) produces an effective amount of thermal contact. In general, utilizing greater amounts of grease (2) in this method produces a better thermal contact. In the preferred embodiment of this invention about 0.5 to about 1 mg of grease (2) is applied to the sample.

Fig. 1 also shows adiabatic layer (4) located at the upper surface of sample (1). The bottom of sample (1) is represented as (5) and is opposite adiabatic layer (4). FIG. 1b shows a block diagram of the same conventional differential scanning calorimeter furnace (3).

Fig. 1a and 1b show schematic representation of a typical sample furnace system where:

| | |
|---|---|
| $S$ | contact area |
| $c_p$ | specific heat capacity of the sample |
| $\rho$ | sample density |
| $\kappa$ | thermal conductivity of the sample |
| $d$ | sample effective thickness (half of the actual thickness for a sample sealed in a pan) |
| $T_s(x,t)$ | sample temperature |
| $T_p(t)$ | pan temperature |
| $T_o(t)$ | furnace temperature |
| $K_{ps}$ | thermal contact between pan and sample |
| $K_{op}$ | thermal contact between furnace and pan |
| $\Phi_p(t)$ | heat flow rate into the sample |
| $\Phi_o(t)$ | heat flow rate into the pan-sample system |

<u>The Theory</u>

Solving the heat transfer equation for a model of Fig. 1 a and 1b, a relatively thin sample can be considered as a one-dimensional system, where the expression for the apparent heat capacity $C_{app}(\omega)$ of the sample-pan-furnace system is:

$$C_{app}(\omega) = \frac{C_{pan} + C_\beta(\omega)}{1 - \dfrac{i\omega}{K_{op}}\left(C_{pan} + C_\beta(\omega)\right)} \tag{7}$$

where $C_{pan}$ is the heat capacity of the pan,

$$C_\beta(\omega) = \frac{C_\alpha(\omega)}{1 - \dfrac{i\omega}{K_{ps}}C_\alpha(\omega)}, \tag{8}$$

denotes the apparent heat capacity which would be measured directly at the surface of the sample pan and

$$C_\alpha(\omega) = -\frac{1}{i\omega}\kappa \cdot S \cdot \alpha \tanh(\alpha \cdot d), \tag{9}$$

denotes the apparent heat capacity which would be measured directly at the surface of the sample,

$$\alpha = \sqrt{\frac{\omega}{|\chi|}} \exp\left\{\frac{i}{2}\arg\left(-i\frac{\omega}{\chi}\right)\right\}, \quad \chi = \frac{\kappa}{\rho \cdot c_p}$$ is the thermal diffusivity. Eq. (7-9) are complex and valid also for complex frequency dependent thermal conductivity ($\kappa$) and Specific heat capacity ($c_p$).

For the method of thermal conductivity determination it is assumed that $\kappa$ and $c_p$ are real valued and frequency independent. The sample-pan-furnace system may be simplified by excluding the pan. The sample disk is measured directly in the DSC furnace. In this case the sample disk is heated only from bottom layer (5), therefore an adiabatic layer (4) is assumed at the upper surface of the sample (1). Effective sample thickness d is then the actual sample thickness and the contact area S is the bottom surface area of the disk.

In Eq.(7) setting $C_{pan} = 0$ and $K_{op} \to \infty$ leads to $C_{app}(\omega) = C_\beta(\omega)$. Eq.(7) is rewritten as:

$$C_{app}(\omega) = \frac{C_\alpha(\omega)}{1 - \dfrac{i\omega}{K}C_\alpha(\omega)}.$$

$$(10)$$

where now $K$ is the effective thermal contact between the bottom sample surface and the furnace.

Fig.1a and 1b show the preferred DSC setup of the present invention where a solid sample is measured directly in the DSC furnace. Three parameters need to be determined: specific heat capacity ($c_p$), effective thermal contact between the sample and the furnace ($K$) and thermal conductivity ($\kappa$).

The preferred method is to determine the effective heat capacity $C_{eff}(\omega)$ at different frequencies, generating a heat capacity spectrum.

The preferred method of step response analysis in DSC allows the fast generation of heat capacity spectra. In common temperature modulated calorimetry, like $3\omega$-method, AC-calorimetry and temperature modulated differential scanning calorimetry (TMDSC), periodic perturbations are used to determine dynamic heat capacity. In contrast, this method uses a single step in program temperature followed by an isothermal segment to obtain the spectrum of heat capacity. To follow system evolution with time or temperature one can repeat the temperature step several times also in a non-periodic manner (for example, like in StepScan-DSC™ PerkinElmer Instruments). Heating rate and measured heat flow rate are evaluated in time domain. With this method it is possible to cover more than two orders of magnitude in frequency in a single measurement. This allows a dramatic shortening of the measuring time compared to temperature modulated DSC.

The preferred method of generating frequency dependent quantities by DSC is where the programmed temperature undergoes a sharp single step followed by an isothermal segment. To follow system evolution with time or temperature one can repeat the temperature step several times also in a non-periodic manner. Heating rate and measured heat flow rate are evaluated in time domain by Laplace transformation to obtain the heat capacity spectrum.

$C_{eff}(\omega)$ is an effective (apparent) heat capacity of the measured system (which measured by the instrument), which reads:

$$C_{eff}(\omega) = \frac{A_{HF}(\omega)}{i\omega A_T(\omega)} = \frac{A_{HF}(\omega)}{A_q(\omega)}$$

$$(11)$$

where $A_{HF}(\omega)$ is a heat flow rate amplitude, $A_T(\omega)$ is a temperature amplitude, $A_q(\omega)$ is a heating rate amplitude.

One can further calculate from that value the true sample heat capacity by means of a calibration procedure but it is not an essential point for our consideration here. The important point is that the heat capacity at frequency $\omega$ can be calculated only at a non-zero heating rate amplitude $A_q(\omega)$, which means that the heating rate $q(t)$ should have a periodic component with frequency $\omega$. If the instrument has such a sampling rate, that we get $n$ points per period for $HF(t)$ and $q(t)$ signals, Eq. (11) can be rewritten as:

$$C_{eff}(\omega) = \frac{\sum_{i=1}^{n} HF_i \cos(\omega t_i) - i \sum_{i=1}^{n} HF_i \sin(\omega t_i)}{\sum_{i=1}^{n} q_i \cos(\omega t_i) - i \sum_{i=1}^{n} q_i \sin(\omega t_i)} \qquad (1)$$

The periodic heating rate $q(t)$ should contain a delta function to generate an uniform heat flow rate spectrum (i.e. equal $A_q(\omega_k)$ at different frequencies $\omega_k = k \cdot w_0$, $m_0 = 2\pi t_p$, $t_p$ is the basic period of $q(t)$, $k$ is integer). Then the temperature-time profile should have infinite sharp stepwise changes.

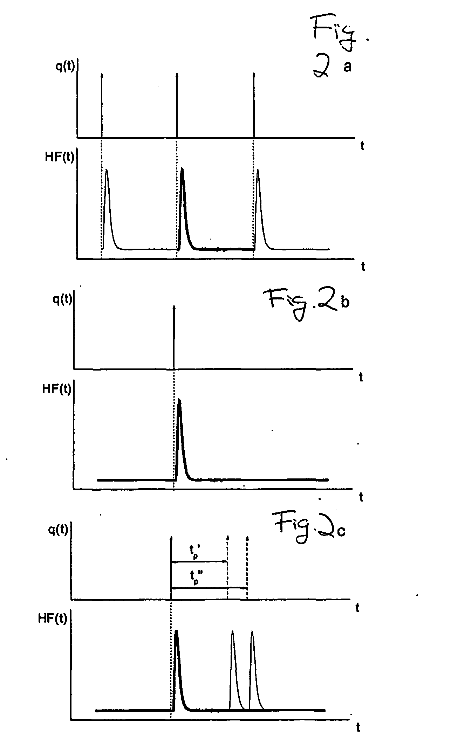

Fig. 2(a) shows a single period of a heating rate function with respect to heat flow rate. If the period between pulses is long enough then the heat flow rate reaches the steady state value before the next temperature step. Since the heat flow rate is periodic, each peak in the heat flow rate starts from the same steady state value. One may set the steady state value of the heat flow rate to zero without influencing the amplitudes of all harmonics. The same can be done with the heating rate.

Since we have a steady state part of the heat flow rate before the peak, the peak itself does not "feel" the previous peaks. Consequently the shape of the peak is exactly the same as that of a single peak measured with only one heating rate pulse, see Fig. 2(b). One may treat this single peak as a single period of some fictitious periodic function with basic period $t_p'$ or $t_p''$, see Fig. 2(c), and calculate $C_{eff}(\omega)$ at the set of frequencies $\omega'_k = k \cdot 2\pi / t'_p$ or $\omega''_k = k \cdot 2\pi / t''_p$. The shortest possible basic period $t_{p\,min}$ of such function is the time the heat flow rate returns back to the steady state value after the perturbation. The longest basic period $t_{p\,max}$ is the time interval the heat flow rate has been actually measured after the temperature step. Since one may vary the basic period in a certain range for this single step in temperature one may generate a continuous spectrum of heating rate instead of a discreet spectrum in case of the periodic q(t). Then $C_{eff}(\omega)$ can be calculated for a continuous frequency range $\omega \geq 2\pi / t_{p\,max}$.

Preferably one may start the Fourier integration just at the position of the delta function (for real measurements - at the beginning of the temperature step) and integrate over the whole period $t_p'$ or $t_p''$. In fact heat flow rate does not contribute to the Fourier integral any more after its relaxation back to the steady state value. Then the only variable for $C_{eff}(\omega)$ determination is the frequency $\omega$.

Finally the data treatment becomes nothing else as an operational calculus. The complicated relation in time domain between heat flow rate and heating rate, which is given by a convolution product, can be resolved using the Laplace transformation

$$L(p) = \int_{0}^{+\infty} f(t) e^{-pt} dt \qquad (12)$$

where variable $p$ can be any complex number and $f(t)$ represents heating rate $q(t)$ and heat flow rate $HF(t)$. We can set $p = i\omega$ and choose the time scale so that $t = 0$ at the very beginning of the temperature step. One may calculate Laplace transformed of the heating rate $q(t)$ and the heat flow rate $HF(t)$ as:

$$L(i\omega) = \int_{0}^{+\infty} f(t) e^{-i\omega t} dt = \int_{0}^{t_p'} f(t) e^{-i\omega t} dt \qquad (13)$$

because remaining integral

$$\int_{t_p'}^{+\infty} f(t) e^{-i\omega t} dt \qquad (14)$$

equals zero for both $q(t)$ and $HF(t)$ (remember that we set the steady state values of $q(t)$ and $HF(t)$ to zero by subtracting the constant offset values). The effective heat capacity we can determine as follows:

$$C_{eff}(\omega) = \frac{\int_0^{t_p'} HF(t)e^{-i\omega t}dt}{\int_0^{t_p'} q(t)e^{-i\omega t}dt} \qquad . \qquad (15)$$

Next the integration limits are fixed and only the frequency $\omega$ varies to get the heat capacity spectrum. If one where to sample $n$ points of heat flow rate and of heating rate during the time interval $(0, t_p')$ the integrals can be changed to sums and Eq. (15) equals exactly Eq. (1), since $e^{-i\omega t} = cos(\omega t) - isin(\omega t)$. Further for real measurement we use Eq. (1).

The area under the heat flow rate peak in time domain is the total amount of heat absorbed by the sample due to the stepwise increase of temperature. This heat equals the numerator in Eq. (15) for $\omega = 0$, that is then simply integral $\int_0^{t_p'} HF(t)dt$ , and the height of the temperature step equals to denominator. Therefore $C_{eff}(0)$, calculated by Eq. (15) or Eq. (1) for $\omega = 0$, corresponds to the total heat capacity.

Since the single step measurement can be analyzed as a fictitious periodic measurement under condition that $q(t)$ and $HF(t)$ start and end at the same steady state values. Therefore to get correct $G_{eff}(\omega)$ values by Eq. (1) the measurements should start from steady state. The step in temperature can be approximated as a very steep heating (or cooling) ramp in short time. For example we have used a programmed heating rate of 75 K/min for 0.8 second and 1.6 second to have 1 K and 2 K temperature steps, respectively. After the temperature step the heat flow rate $HF(t)$ should be recorded until it returns back to steady state.

The measured step in the temperature-time profile is not as sharp as it was programmed because of instrumental delay. The power compensated system having much smaller furnaces than the heat flux system, responds much faster and follows more tightly the program temperature. For $C_{eff}(\omega)$ determination by Eq. (1) a large part of the instrumental delay can be eliminated by using the measured heating rate instead of programmed one.

$C_{eff}(\omega)$ values, calculated by Eq. (1) correspond to some average values of actual $C_{eff}(\omega)$ spectrum in the temperature range $(T_0, T_0 + \Delta T)$ and in the time interval $(t_0, t_0 + t_{p\ max})$, where $T_0$ is the starting temperature of the step measurement, $\Delta T$ is the height of the temperature step, $t_0$ is the starting time, $t_{p\ max}$ is the total measuring time of the single step. One may monitor the evolution of the $C_{eff}(\omega)$ spectrum with changing temperature or with time (e.g. during isothermal crystallization), one can repeat the step perturbation at another temperature or at another time.

Therefore, the effective heat capacity $C_{eff}(\omega)$ at different frequencies is preferably calculated from step response analysis as a ratio of heat flow rate amplitude $A_{HF}$ and heating rate amplitude $A_q$:

$$C_{eff}(\omega) = \frac{A_{HF}}{A_q} = \frac{\sum_{i=1}^n HF_i \cos(\omega t_i) - i\sum_{i=1}^n HF_i \sin(\omega t_i)}{\sum_{i=1}^n q_i \cos(\omega t_i) - i\sum_{i=1}^n q_i \sin(\omega t_i)} \qquad (1)$$

where points of heat flow rate, $HF_i$, and heating rate, $q_i$, are preferably taken both with the same sampling rate (number of points per unit time). Preferably the points are collected from the beginning of the temperature step until the heat flow reaches the steady state value at the isotherm, having in total $n$ points. After that the $C_{eff}(\omega)$ values should be corrected for apparatus influence (instrumental delay) as:

$$C_{app}(\omega) = C_{eff}(\omega) \cdot B_2(\omega) \qquad . \qquad (2)$$

where $C_{app}(\omega)$ is an apparent heat capacity at frequency w, and $B_2(\omega)$ is the dynamic calibration factor of the instrument.

Preferably, the first parameter of the system, the specific heat capacity $c_p$, can be easily determined as:

$$c_p = \frac{C_{\text{eff}}(0)}{m_s}$$  (3)

where $m_s$ is the sample mass and $C_{eff}(0)$ is calculated from Eg. (1) for $\omega = 0$.

In the preferred method of measuring thermal conductivity apparent heat capacity is given as:

$$C_{app}(\omega) = \frac{C_\alpha(\omega)}{1 - \dfrac{i\omega}{K} C_\alpha(\omega)}$$  (4)

where $C_\alpha(\omega)$ is the apparent heat capacity in a case of ideal thermal contact between the sample and the furnace. It is the apparent heat capacity which is measured directly on the bottom surface of the sample.

Equation (4) from above can be re-written as:

$$C_\alpha(\omega) = \frac{C_{app}(\omega)}{1 + \dfrac{i\omega}{K} C_{app}(\omega)}$$  (5)

Unknown parameter in Eq.(5) is $K$ because $C_{app}(\omega)$ is measured by DSC. The lower the frequency $\omega_k$ the larger the modulus of $C_{app}(\omega_k)$ and $C_\alpha(\omega_k)$.

In the preferred method of measuring thermal conductivity the second parameter of the system is determined by describing $C_\alpha(\omega)$ on a solid curve. The theoretical $C_\alpha(\omega)$ curve in a polar plot representation depends only on the value $C_\alpha(\omega = 0)$, that is sample true heat capacity $c_p \cdot m_s$, and does not depend on all other parameters. The correct value for $K$ is then the value at which all $C_\alpha(\omega_k)$ points, calculated by Eq.(5), lie on the theoretical curve.

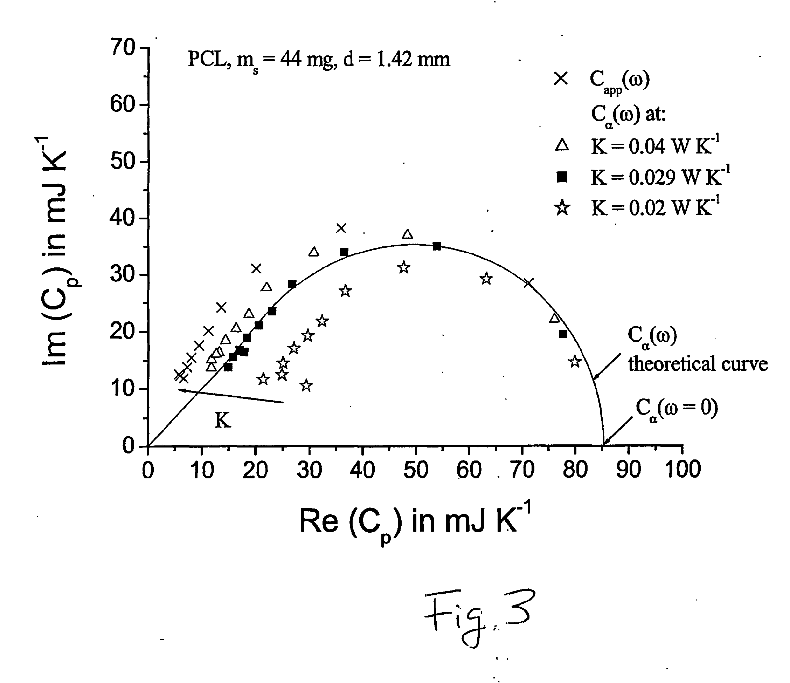

Fig. 3 shows values of $C_{app}(\omega_k)$ for a set of different frequencies $\omega_k$ and $C_\alpha(\omega_k)$ for three different values of $K$ at 0.04 W K$^{-1}$, 0.029 W K$^{-1}$, and 0.02 W K$^{-1}$. A polar plot of $C_{app}(\omega_k)$ and $C_\alpha(\omega_k)$ for effective thermal contact $K$ is shown for PCL where m is equal to 44 mg and d=1.42 mm. The horizontal and vertical axes show the real and imaginary parts, respectively. Solid curve is theoretical values of $C_\alpha(\omega)$ for given $C_\alpha(\omega = 0)$. Since the correct value for $K$ is the value at which all $C_\alpha(\omega_k)$ points, calculated by Eq.(5), lie on the theoretical curve. In this case $K = 0.029$ W K$^{-1}$.

The preferred method of measuring thermal conductivity where sample thermal conductivity $\kappa$ is readily determined by:

$$C_\alpha(\omega) = -\frac{1}{i\omega} \kappa \cdot S \cdot \alpha \tanh(\alpha \cdot d)$$  (6)

where all parameters, except thermal conductivity $\kappa$, are known (density $\rho$ can be calculated from the sample mass and sample size, which are set before measurement). At any given frequency $\omega_k \neq 0$ increasing of $\kappa$ leads to shifting the position of the $C_\alpha(\omega_k)$ point on the theoretical curve towards $C\alpha(\omega = 0)$.

The preferred method of measuring thermal conductivity where by varying $\kappa$ in:

$$C_\alpha(\omega) = -\frac{1}{i\omega} \kappa \cdot S \cdot \alpha \tanh(\alpha \cdot d)$$  (6)

the condition is reached where the same set of $\omega_k$ calculated $C\alpha(\omega_k)$ points coincide with measured points $C_\alpha(\omega_k)$, determined by Eq.(5).

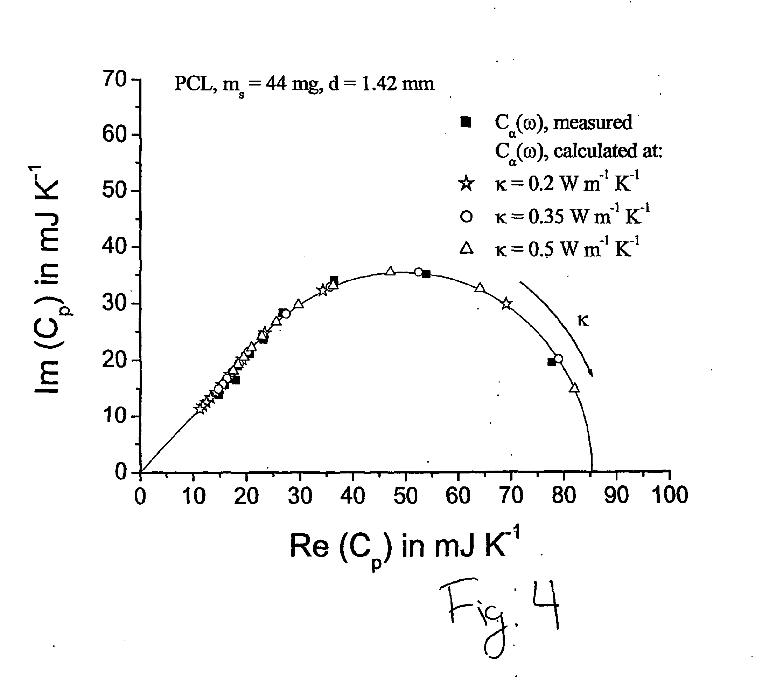

Fig. 4 shows a polar plot of $C_\alpha(\omega_k)$, measured and calculated for different values of thermal conductivity $\kappa$. The horizontal and vertical axes show the real and imaginary parts, respectively. By varying $\kappa$ in Eq.(6) the condition is reached where the same set of $\omega_k$ calculated $C_\alpha(\omega_k)$ points coincide with measured points $C_\alpha(\omega_k)$, determined by Eq. (5). In this case for PCL where m is equal to 44 mg and d=1.42 mm it happens at $\kappa = 0.35$ W m$^{-1}$ K$^{-1}$.

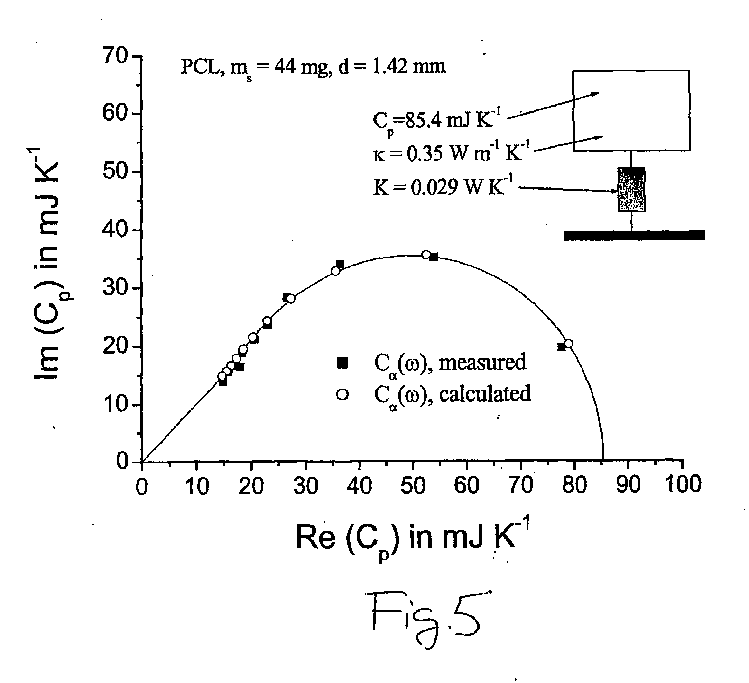

Fig. 5 shows that the measured points for $C_\alpha(\omega_k)$ will not exactly coincide with theoretical ones, rather a scatter corresponding to only about 1 to about 2 percent uncertainties in determination of thermal conductivity ($\kappa$) and effective thermal contact ($K$) is produced in this case for PCL where m is equal to 44 mg and d=1.42 mm.

The algorithm to determine thermal conductivity and effective thermal contact from the spectrum of $C_{app}(\omega_k)$ is realized on MS-Excel™ spreadsheet with Visual Basic™ macros.

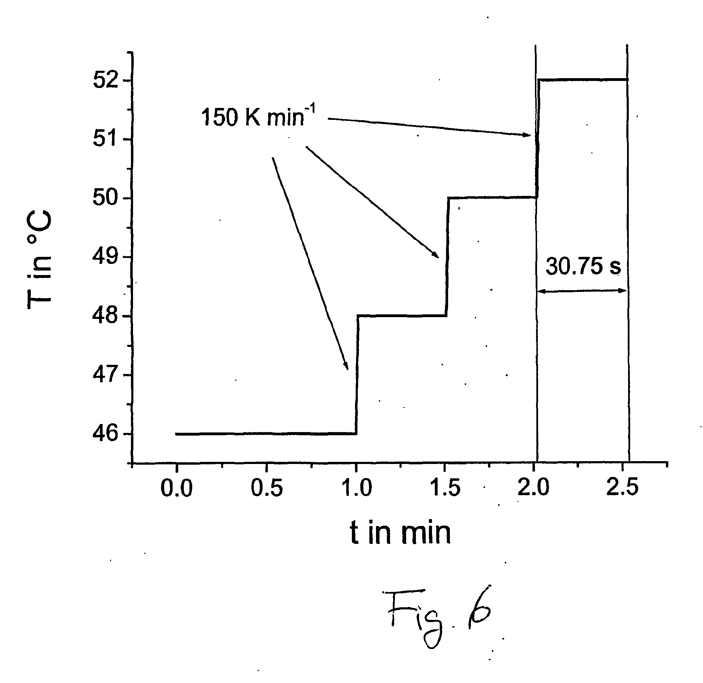

Fig. 6 shows a temperature-time program, consisting of 2 K steps in temperature and 30 s isotherms. Temperature steps were programmed as short heating segments with 150 K min-1 heating rate. Temperature-time program shown in Fig. 6 was used to generate the spectrum of apparent heat capacities in the examples below.

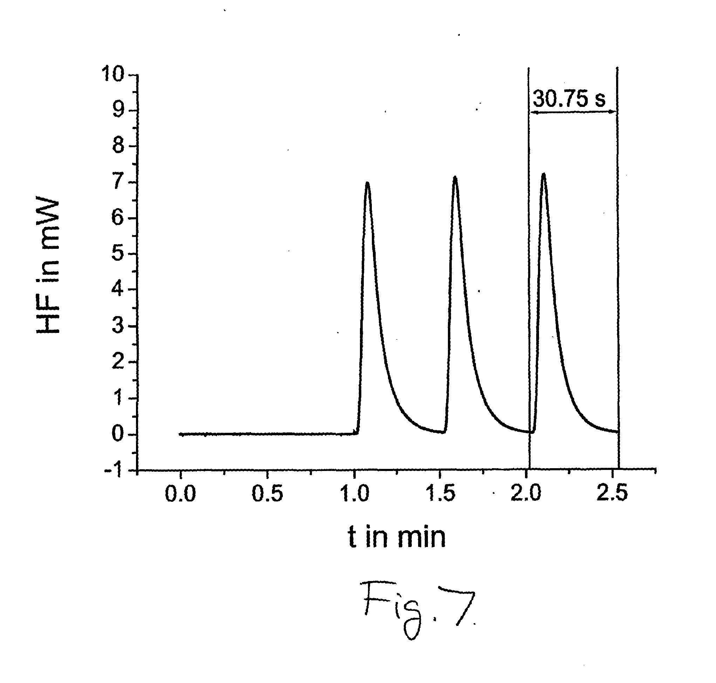

Fig. 7 shows an example of measured heat flow rate HF versus time which corresponds to the temperature-time program, shown in Fig. 6. The last peak was taken for further data evaluation. Initial isotherm of 1 min was added to check whether heat flow drift at steady state is remarkable. Fig. 7 shows corresponding heat flow rate after empty furnace correction is shown (Since we did not use a pan we subtracted the heat flow measured with an empty furnace.)

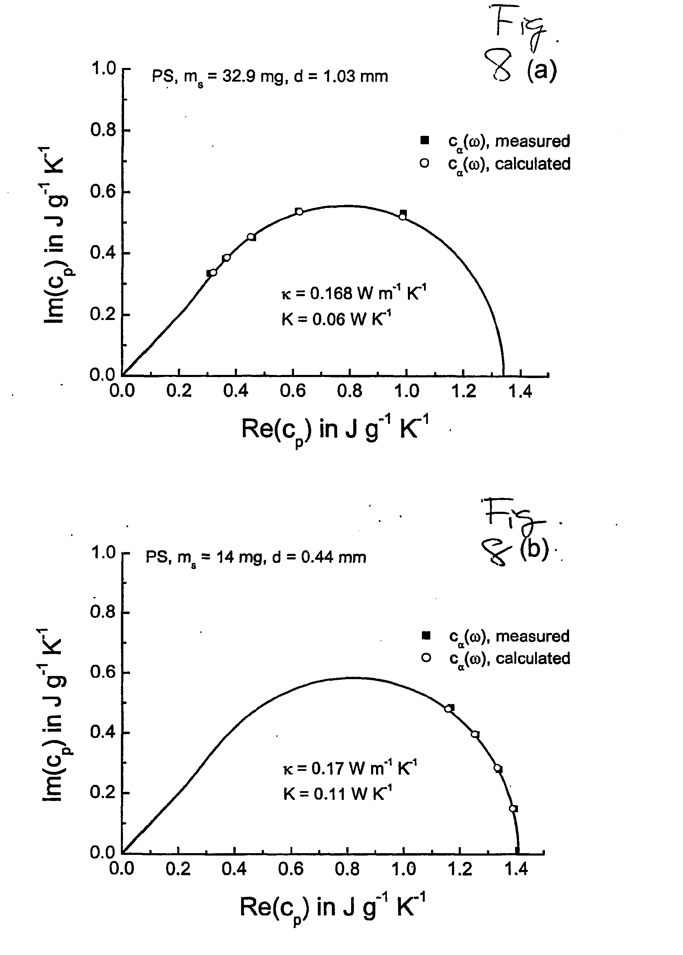

Fig. 8 shows a polar plot of $C_\alpha(\omega_k)$, measured and calculated, for PS disks with thickness 1.03 mm (a) and 0.44 mm (b). The horizontal and vertical axes show the real and imaginary parts, respectively. Two PS disks with different thickness give quite different values of $C_\alpha(\omega_k)$ at the same set of frequencies. However both sets of $C_\alpha(\omega_k)$ give almost the same value of thermal conductivity $\kappa$ of about 0.17 W m$^{-1}$ K$^{-1}$ that is the property of the material.

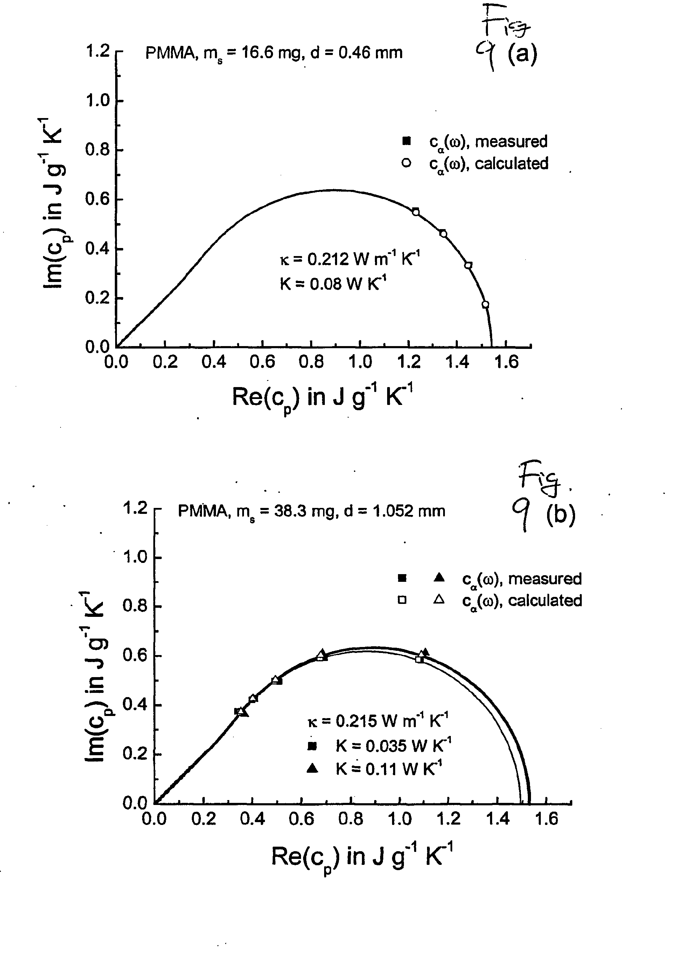

Fig. 9 shows a polar plot of $C_\alpha(\omega_k)$, measured and calculated, for PMMA disks with thickness 0.46 mm (a) and 1.052 mm (b). The horizontal and vertical axes show the real and imaginary parts, respectively. In part (b) $C_\alpha(\omega_k)$ values are shown for two different effective thermal contacts $K = 0.035$ W K$^{-1}$ and $K = 0.11$ W K$^{-1}$ and slightly different $c_p$. Two PMMA disks with different thickness give quite different values of $C_\alpha(\omega_k)$ at the same set of frequencies. However both sets of $C_\alpha(\omega_k)$ give almost the same value of thermal conductivity $\kappa$ of about 0.214 W m$^{-1}$ K$^{-1}$ that is the property of the material. Fig. 9b shows $C_\alpha(\omega_k)$ values are obtained from two different measurements of the same disk (d = 1.052 mm, D = 6.4 mm) with different amount of grease. In spite of the large difference in thermal contact ($K_1 = 0.035$ W K$^{-1}$, $K_2 = 0.11$ W K$^{-1}$) the same value for thermal conductivity ($\kappa = 0.215$ W m$^{-1}$ K$^{-1}$) is obtained. It is important to mention that specific heat capacity in these two measurements (thin and thick curves) is different. Additional heat capacity of the grease in second measurement (thick curve) increases total measured heat capacity which is normalized to the same sample mass. Of course, the measured points coincide with calculated ones only to some extend. There is always some scatter in the data.

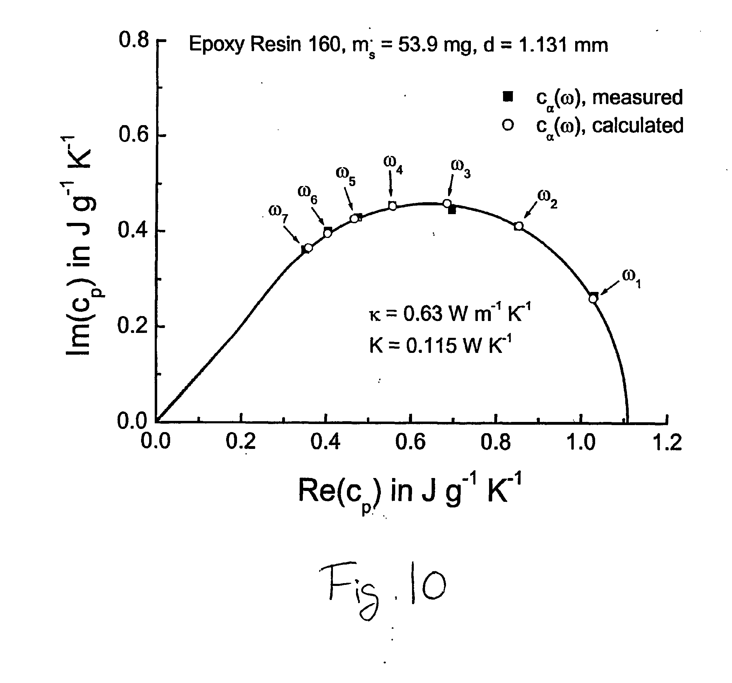

Fig. 10 shows a polar plot of $C_\alpha(\omega_k)$, measured and calculated, for Epoxy Resin 160 disk with 1.131 mm thickness. The horizontal and vertical axes show the real and imaginary parts, respectively. The results for epoxy resin 160, measured $C_\alpha(\omega_3 = 3\omega_0)$ deviates relatively strong from calculated value. Some difficulties appeared when measuring material with relatively high thermal conductivity (epoxy resin 4173). At the given sample thickness, the temperature waves are damped only slightly and the finite thermal conductivity gives similar frequency dependence of $C_\alpha(\omega)$ as the thermal contact.

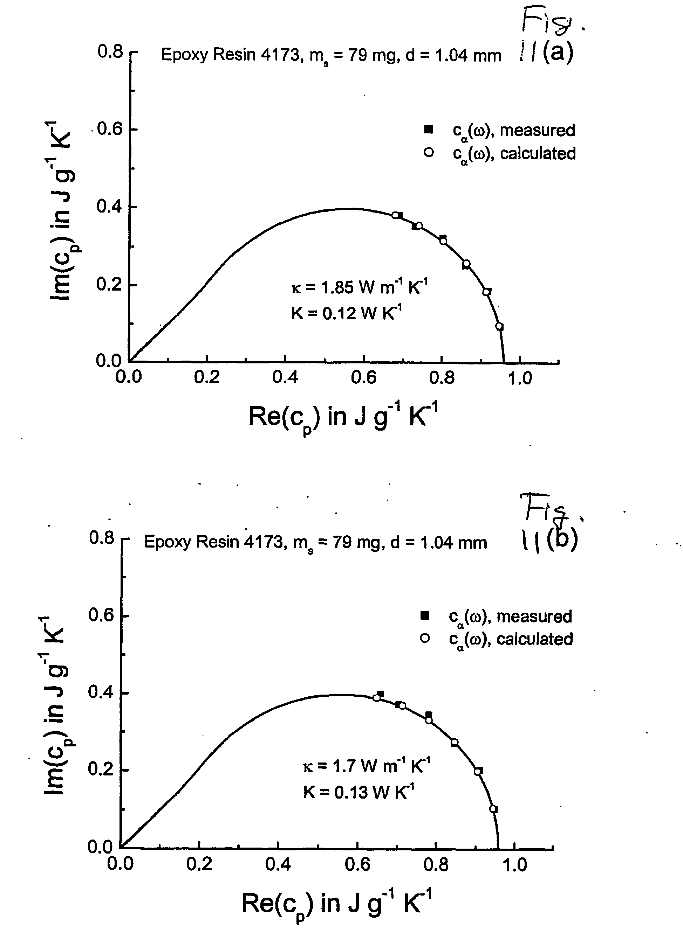

Fig. 11 shows a polar plot of $C_\alpha(\omega_k)$, measured and calculated, for Epoxy Resin 4173. The horizontal and vertical axes show the real and imaginary parts, respectively. Two different sets of parameters $\kappa$ and $K$ ($\kappa = 1.85$ W m$^{-1}$ K$^{-1}$, $K = 0.12$ W K$^{-1}$ (a) and $\kappa = 1.7$ W m$^{-1}$ K$^{-1}$, $K = 0.13$ W K$^{-1}$ (b)) describe the measured points with the same quality. Here the same measured data set can give slightly lower thermal contact $K$ and higher thermal conductivity $\kappa$ or higher $K$ and lower $\kappa$- measured and calculated points in both cases more or less coincide. It is impossible to narrow the range of $K$ and into get the correct pair. In this case the way to resolve the influences from thermal contact $K$ and thermal conductivity $\kappa$ is to increase further the frequency of temperature waves (to take much higher number for $k$ in $\omega_k = k \cdot \omega_0$, which used in Eq.(1)).

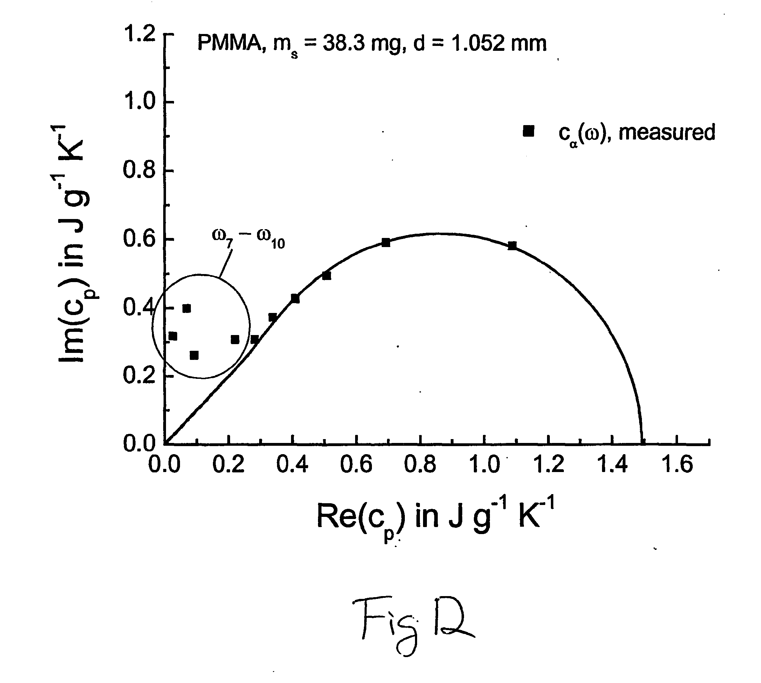

Fig. 12 shows a polar plot of $C_\alpha(\omega_k)$ for a PMMA disk. The horizontal and vertical axes show the real and imaginary parts, respectively. $C_\alpha(\omega_k)$ values, measured at high frequencies ($\omega_7$ to $\omega_{10}$), are uncertain.

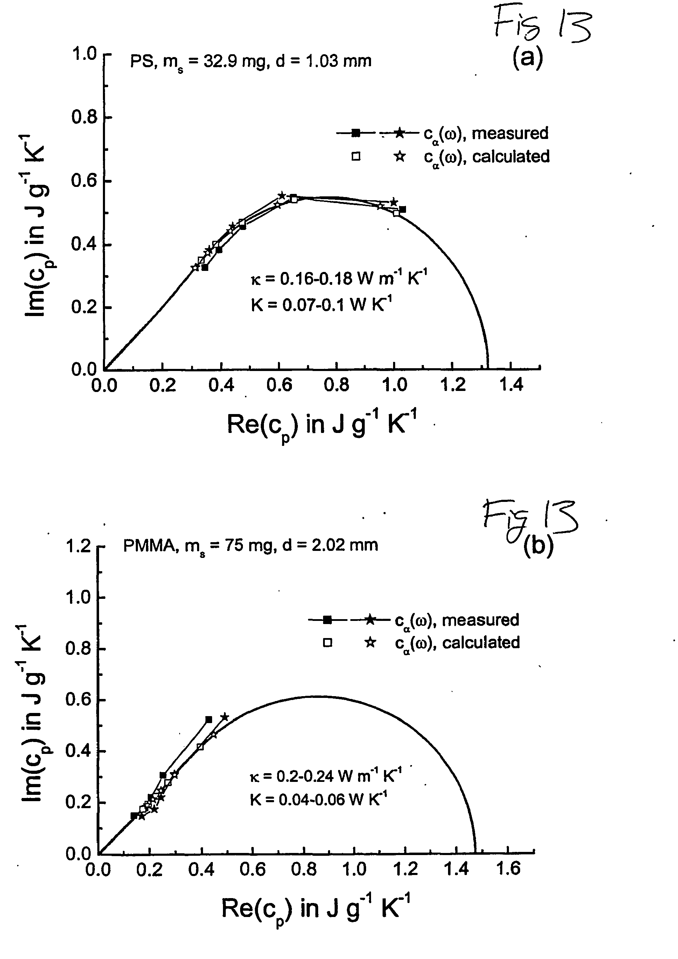

Fig. 13 shows a polar plot of $C_\alpha(\omega_k)$ for PS (a) and PMMA (b) disks. The horizontal and vertical.axes show the real and imaginary parts, respectively. Measured and calculated values do not coincide simultaneously for the whole set of frequencies $\omega_k$. There could be two reasons for this disagreement: inhomogeneous thermal contact in case of thin disk, Fig. 13a, or too thick disk, Fig. 13b. In both cases the one dimensional model used for calculation could not give exact values of thermal conductivity. But one can get some range of possible value of thermal conductivity. From the width of the range one gets an impression about the validity of the model to describe the given experimental conditions, or, put another way, how faulty were the experimental conditions.

The following examples are given for the purpose of illustrating the present invention and are not intended to limit the scope in any way.

EXAMPLE 1

Polystyrene (PS) samples with know thermal conductivity were measured (ASTM interlabarotory test for thermal conductivity by modulated temperature DSC). Samples were prepared in a disc shape with a diameter D = 6.4 mm and thickness d of about 0.5 and 1mm. The measurements were performed by Perkin-Elmer Pyris-1 DSC and Lauda RC6 cooling system. DSC block temperature was set to +5°C. Purge gas was nitrogen with gas flow of 20 ml min$^{-1}$. Since the furnace floor is slightly curved and the discs are not flexible, Apiezon$^{™}$ grease was utilized to get homogeneous thermal contact over the whole contact area between the bottom of the sample and the furnace. It is more important to homogenize the contact rather than to minimize its resistance. Temperature-time program shown in Fig. 8 was used to generate the spectrum of apparent heat capacity. Initial isotherm of 1 min was added to check whether heat flow drift at steady rate is remarkable. Corresponding heat flow rate after empty furnace correction is shown at Fig. 9 (since a pan was not utilized, it is necessary to subtract the heat flow measured with an empty furnace). Seven frequencies were taken into consideration such that $\omega_k$ = $K\omega_0$, K = {1, 2, ... ,7}, $w_0$= $2\pi/t_p$ and period $t_p$ = 30.75s. The results of thermal conductivity determination are shown in Table 1 below. Fig. 10 show two PS discs with different thickness give different values of $C_\alpha(\omega_k)$ at the same set of frequencies. Both sets of $C_\alpha(\omega_k)$ give almost the same value of thermal conductivity $\kappa$ of about 0.17 W m$^{-1}$ K$^{-1}$ that is the property of the material. The measured data are also presented in polar plots, where measured apparent heat capacity $C_\alpha(\omega_k)$ (filled symbols) is compared with calculated ones (open symbols). It is possible to plot specific values for better comparison of the results for different sample masses. Solid line corresponds to theoretical curve of $C_\alpha(\omega)$, see Eq. (6).

EXAMPLE 2

Polystyrene (PMMA) samples with know thermal conductivity were measured (ASTM interlabarotory test for thermal conductivity by modulated temperature DSC). The measurements were performed by Perkin-Elmer Pyris-1 DSC and Lauda RC6 cooling system. The sample was prepared and thermal conductivity was determined the same way as in example 1. Temperature-time program shown in Fig. 8 was used to generate the spectrum of apparent heat capacity. Corresponding heat flow rate after empty furnace correction is shown at Fig. 9 (since a pan was not utilized, it is necessary to subtract the heat flow measured with an empty furnace). The results of thermal conductivity determination are shown in Table 1 below. Fig. 11 show two PMMA discs with different thickness give different values of $C_\alpha(\omega_k)$ at the same set of frequencies. Both sets of $C_\alpha(\omega_k)$ give almost the same value of thermal conductivity $\kappa$ of about 0.214 W m$^{-1}$ K$^{-1}$ that is the property of the material.

EXAMPLE 3

Epoxy resins 160 (provided by Mathis Instruments) with know thermal conductivity was measured. Samples were prepared in a disc shape with a diameter D = 6 mm and thickness d of about 0.5 and 1 mm. The measurements were performed by Perkin-Elmer Pyris-1 DSC and Lauda RC6 cooling system. DSC block temperature was set to +5°C. Purge gas was nitrogen with gas flow of 20 ml min$^{-1}$. Since the furnace floor is slightly curved and the discs are not flexible, Apiezon$^{™}$ grease was utilized to get homogeneous thermal contact over the whole contact area between the bottom of the sample and the furnace. It is more important to homogenize the contact rather than to minimize its resistance. Temperature-time program shown in Fig. 8 was used to generate the spectrum of apparent heat capacity. Initial isotherm of 1 min was added to check whether heat flow drift at steady rate is remarkable. Corresponding heat flow rate after empty furnace correction is shown at Fig. 9 (since a pan was not utilized, it is necessary to subtract the heat flow measured with an empty furnace). Seven frequencies were taken into consideration such that $\omega_k$ = $K\omega_0$, K = {1, 2, ... , 7}, $\omega_0$ = $2\pi/t_p$ and period $t_p$= 30.75s. The results of thermal conductivity determination are shown in Table 1 below.

EXAMPLE 4

Epoxy resin 4173 (provided by Mathis Instruments) with know thermal conductivity was measured. The measurements were performed by Perkin-Elmer Pyris-1 DSC and Lauda RC6 cooling system. The sample was prepared and thermal conductivity was determined the same way as in example 3. Temperature-time program shown in Fig. 8 was used to generate the spectrum of apparent heat capacity. Corresponding heat flow rate after empty furnace correction is shown at Fig. 9 (since a pan was not utilized, it is necessary to subtract the heat flow measured with an empty furnace). The results of thermal conductivity determination are shown in Table 1 below.

**Table 1: Comparative thermal conductivities measured at 51 °C for four different samples**

| material | measured $\kappa$ in W m$^{-1}$ K$^{-1}$ | expected $\kappa$ in W m$^{-1}$ K$^{-1}$ |
|---|---|---|
| PS | 0.168-0.172 | 0.1562 (when taken at 47°C) |
| PMMA | 0.212-0.215 | 0.197 (when taken at 47.2°C) |
| epoxy resin 160 | 0.63 | 0.61 |
| epoxy resin 4173 | 1.70-1.85 | 1.83 |

**Claims**

1. A method of measuring the Thermal conductivity of a sample comprising the step of:

   (a) preparing a sample of the material in the form of a thin wafer having a known thickness, known dimensions, and known density;
   **characterized by** the further steps of:
   (b) measuring the effective heat capacity of said sample and generating an effective heat capacity spectrum;
   (c) determining the apparent heat capacity by adjusting the value of said effective heat capacity spectrum of step (b);
   (d) determining the specific heat capacity of said sample;
   (e) determining the effective thermal contact of said sample;
   (f) calculating the thermal conductivity of the material based at least upon said apparent heat capacity of said sample, said effective thermal contact of said sample, and said specific heat capacity of said sample.

2. The method of claim 1, **characterized in that** the thickness of said sample is about 1 mm or less.

3. The method of claim 1, **characterized by** further comprising the step of applying heat sink compound to said sample.

4. The method of claim 3, **characterized in that** said heat sink compound is grease.

5. The method of claim 1, **characterized in that** said sample is a wafer in the form of a circular disc.

6. The method of claim 1, **characterized in that** said sample is a polymer.

7. The method of claim 6, **characterized in that** said polymer comprises a low thermal conducting material having a thermal conductivity value in the range of about 0.1 to about 2 W m$^{-1}$ K$^{-1}$.

8. The method of claim 6, **characterized in that** said polymer is selected from the group consisting of polystyrene, PMMA, epoxy resin 160, and epoxy resin 4173, and combinations of these.

9. The method of claim 1, **characterized by** further comprising the step of placing said sample into a sample position of a differential scanning calorimeter.

10. The method of claim 9, **characterized in that** the step of measuring the effective heat capacity of said sample using said differential scanning calorimeter further comprises the step of calculating a ratio of heat flow rate amplitude and heating rate amplitude.

11. The method of claim 10, **characterized by** further comprising using Laplace transformation to generate a spectrum of heat capacity.

12. The method of claim 10, **characterized by** further comprising using Fourier transformation to generate a spectrum of heat capacity.

13. The method of claim 10, **characterized by** comprising using the formulation

$$C_{eff}(\omega) = \frac{A_{HF}}{A_q} = \frac{\sum_{i=1}^{n} HF_i \cos(\omega t_i) - i \sum_{i=1}^{n} HF_i \sin(\omega t_i)}{\sum_{i=1}^{n} q_i \cos(\omega t_i) - i \sum_{i=1}^{n} q_i \sin(\omega t_i)}$$

to generate a spectrum of heat capacity, wherein $C_{eff}(\omega)$ is the effective heat capacity and $A_{HF}$ is the heat flow rate amplitude and $A_q$ is the heating rate amplitude.

14. The method of claim 10, **characterized in that** temperature undergoes at least one step in temperature followed by at least one isothermal segment to generate a spectrum of heat capacity.

15. The method of claim 1, **characterized in that** the step of determining the apparent heat capacity comprises correcting for instrumental delay.

16. The method of claim 15, **characterized in that** the step of determining the apparent heat capacity further comprises applying the formulation

$$C_{app}(\omega) = C_{eff}(\omega) \cdot B_2(\omega)$$

wherein $C_{app}(\omega)$ is an apparent heat capacity at frequency $\omega$, and $B_2(\omega)$ is the dynamic calibration factor of the instrument.

17. The method of claim 1, **characterized in that** the step of determining the specific heat capacity of said sample comprises applying the formulation

$$c_p = \frac{C_{eff}(0)}{m_s}$$

wherein $c_p$ is the heat capacity, $m_s$ is the sample mass, and $C_{eff}(0)$ is calculated for $\omega = 0$.

18. The method of claim 1, **characterized in that** the step of determining the effective thermal contact of said sample comprises describing $C_\alpha(\omega)$ on a solid curve wherein said solid curve is a polar plot representation dependent only on the value $C_\alpha(\omega)$ on a solid curve wherein said solid curve is a polar plot representation dependent only on the value $C_\alpha(\omega = 0)$, and wherein effective thermal contact of said sample is then the value at which all $C_\alpha(\omega_k)$ points lie on the theoretical curve,

19. The method of claim 1, **characterized in that** the step of calculating the thermal conductivity of the material comprises applying the formulation

$$C_\alpha(\omega) = -\frac{1}{i\omega} \kappa \cdot S \cdot \alpha \tanh(\alpha \cdot d)$$

wherein where all measured parameters are known except thermal conductivity $\kappa$, are known wherein density $\rho$ can be calculated from the sample mass and sample size, and wherein any frequency $\omega_k \neq 0$, and wherein increasing of $\kappa$ leads to shifting the position of the $C_\alpha(\omega_k)$ point on the theoretical curve towards $C_\alpha(\omega = 0)$.

20. The method of claim 1, **characterized in that** the step of calculating the thermal conductivity of a sample is determined on a computer.

**21.** The method of claim 1, **characterized in that** the step of calculating the thermal conductivity of a sample is realized on MS-Excel™ spreadsheet with Visual Basic™ macros.

**22.** The method of claim 1, **characterized in that** the step of measuring the effective heat capacity of said sample comprises measuring the heat capacity of said sample with at least two different modulation frequencies and wherein only one measurement for effective heat capacity of said sample was obtained.


**Patentansprüche**

**1.** Ein Verfahren zum Messen der thermischen Leitfähigkeit einer Probe, das Verfahren mit dem Schritt:

(a) Vorbereiten einer Probe des Materials in der Form eines dünnen Wafers mit einer bekannten Dicke, bekannten Abmessungen und einer bekannten Dichte;
wobei das Verfahren durch die folgenden Schritte **gekennzeichnet** ist:
(b) Messen der effektiven Wärmekapazität der Probe und Erzeugen eines Spektrums der effektiven Wärmekapazität;
(c) Bestimmen der scheinbaren Wärmekapazität, indem der Wert des Spektrums der effektiven Wärmekapazität aus Schritt (b) angepasst wird;
(d) Bestimmen der spezifischen Wärmekapazität der Probe;
(e) Bestimmen des effektiven thermischen Kontakts der Probe;
(f) Berechnen der thermischen Leitfähigkeit des Materials basierend zumindest auf der scheinbaren Wärmekapazität der Probe, des effektiven thermischen Kontakts der Probe und der spezifischen Wärmekapazität der Probe.

**2.** Das Verfahren nach Anspruch 1, **dadurch gekennzeichnet, dass** die Dicke der Probe ungefähr einen Millimeter oder weniger beträgt.

**3.** Das Verfahren nach Anspruch 1, **gekennzeichnet durch** einen weiteren Schritt eines Aufbringens einer Masse zum Wärmeableiten an der Probe.

**4.** Das Verfahren nach Anspruch 3, **dadurch gekennzeichnet, dass** es sich bei der Masse zum Wärmeableiten um Fett handelt.

**5.** Das Verfahren nach Anspruch 1, **dadurch gekennzeichnet, dass** der Wafer die Form einer kreisförmigen Scheibe hat.

**6.** Das Verfahren nach Anspruch 1, **dadurch gekennzeichnet, dass** die Probe ein Polymer ist.

**7.** Das Verfahren nach Anspruch 6, **dadurch gekennzeichnet, dass** das Polymer ein Material mit einer geringen thermischen Leitfähigkeit aufweist, wobei der Wert der thermischen Leitfähigkeit in einem Bereich von ungefähr 0,1 bis ungefähr 2 W m$^{-1}$ K$^{-1}$ liegt.

**8.** Das Verfahren nach Anspruch 6, **dadurch gekennzeichnet, dass** das Polymer aus einer Gruppe ausgewählt ist, die Gruppe bestehend aus Polystyren, PMMA, Epoxydharz 160, Epoxydharz 4173 und Kombinationen aus diesen Stoffen.

**9.** Das Verfahren nach Anspruch 1, **gekennzeichnet durch** den weiteren Schritt eines Platzierens der Probe in einer Probeaufnahme eines Kalorimeters, das mit differentieller Erfassung arbeitet.

**10.** Das Verfahren nach Anspruch 9, **dadurch gekennzeichnet, dass** der Schritt des Messens der effektiven Wärmekapazität der Probe unter Verwendung des Kalorimeters, das mit differentieller Erfassung arbeitet, des Weiteren einen Schritt eines Berechnens eines Verhältnisses der Amplitude der Wärmeflussrate und der Amplitude der Heizrate aufweist.

**11.** Das Verfahren nach Anspruch 10, **dadurch gekennzeichnet, dass** es ferner eine Verwendung einer Laplace-Transformation aufweist, um ein Spektrum der Wärmekapazität zu erzeugen.

**12.** Das Verfahren nach Anspruch 10, **dadurch gekennzeichnet, dass** es ferner eine Verwendung einer Fourier-Transformation aufweist, um ein Spektrum der Wärmekapazität zu erzeugen.

**13.** Das Verfahren nach Anspruch 10, **dadurch gekennzeichnet, dass** die Formel

$$C_{eff}(\omega) = \frac{A_{HF}}{A_q} = \frac{\sum_{i=1}^{n} HF_i \cos(\omega t_i) - i \sum_{i=1}^{n} HF_i \sin(\omega t_i)}{\sum_{i=1}^{n} q_i \cos(\omega t_i) - i \sum_{i=1}^{n} q_i \sin(\omega t_i)}$$

verwendet wird, um ein Sepktrum der Wärmekapazität zu erzeugen, wobei $C_{eff}(\omega)$ die effektive Wärmekapazität ist, $A_{HF}$ die Amplitude der Wärmeflussrate ist und Aq die Amplitude der Heizrate ist.

**14.** Das Verfahren nach Anspruch 10, **dadurch gekennzeichnet, dass** die Temperatur zumindest einem Temperaturschritt unterworfen wird, dem zumindest ein isothermer Abschnitt folgt, um ein Spektrum der Wärmekapazität zu erzeugen.

**15.** Das Verfahren nach Anspruch 1, **dadurch gekennzeichnet, dass** der Schritt des Bestimmens der scheinbaren Wärmekapazität ein Korrigieren im Hinblick auf eine Verzögerung der Instrumente aufweist.

**16.** Das Verfahren nach Anspruch 15, **dadurch gekennzeichnet, dass** der Schritt des Bestimmens der scheinbaren Wärmekapazität des Weiteren die Anwendung der Formel

$$C_{app}(\omega) = C_{eff}(\omega) \cdot B_2(\omega)$$

aufweist, wobei $C_{app}(\omega)$ eine scheinbare Wärmekapazität bei der Frequenz $\omega$ ist und wobei $B_2(\omega)$ der dynamische Kalibrierfaktor des Instruments ist.

**17.** Das Verfahren nach Anspruch 1, **dadurch gekennzeichnet, dass** der Schritt des Bestimmens der spezifischen Wärmekapazität der Probe die Anwendung der Formel

$$c_p = \frac{C_{eff}(0)}{m_s}$$

aufweist, wobei $c_p$ die Wärmekapazität ist, $m_s$ die Masse der Probe ist und $C_{eff}(0)$ für $\omega = 0$ berechnet ist.

**18.** Das Verfahren nach Anspruch 1, **dadurch gekennzeichnet, dass** der Schritt des Bestimmens des effektiven thermischen Kontakts der Probe ein Beschreiben von $C_\alpha(\omega)$ auf einer durchgehenden Kurve aufweist, wobei es sich bei der durchgehenden Kurve um eine Repräsentation in Polarkoordinaten handelt, die nur von dem Wert $C_\alpha(\omega = 0)$ abhängig ist, und wobei der effektive thermische Kontakt der Probe dann der Wert ist, bei dem alle Punkte $C_\alpha(\omega_k)$ auf der theoretischen Kurve liegen.

**19.** Das Verfahren nach Anspruch 1, **dadurch gekennzeichnet, dass** der Schritt des Berechnens der thermischen Leitfähigkeit des Materials das Anwenden der Formel

$$C_\alpha(\omega) = -\frac{1}{i\omega}\kappa \cdot S \cdot \alpha \tanh(\alpha \cdot d)$$

aufweist, wobei alle gemessenen Parameter mit Ausnahme der thermischen Leitfähigkeit $\kappa$ bekannt sind, wobei die Dichte p aus der Masse der Probe und aus der Größe der Probe berechnet werden kann und wobei jede Frequenz $\omega_k \neq 0$ ist und wobei das Erhöhen von $\kappa$ zu einem Verschieben der Position des Punkts $C_\alpha(\omega_k)$ auf der theoretischen Kurve in Richtung $C_\alpha(\omega = 0)$ führt.

**20.** Das Verfahren nach Anspruch 1, **dadurch gekennzeichnet, dass** der Schritt des Berechnens der thermischen Leitfähigkeit einer Probe mittels eines Computers bestimmt wird.

**21.** Das Verfahren nach Anspruch 1, **dadurch gekennzeichnet, dass** der Schritt des Berechnens der thermischen Leitfähigkeit einer Probe durch eine Tabelle in MS-Excel™ mit Makros in Visual Basic™ realisiert wird.

**22.** Das Verfahren nach Anspruch 1, **dadurch gekennzeichnet, dass** der Schritt des Messens der effektiven Wärmekapazität der Probe ein Messen der Wärmekapazität der Probe mit zumindest zwei verschiedenen Modulationsfrequenzen aufweist und wobei nur eine Messung für die effektive Wärmekapazität der Probe bestimmt wurde.


**Revendications**

**1.** Procédé de mesure de la conductivité thermique d'un échantillon, comprenant les étapes consistant à :

(a) Préparer un échantillon du matériau, sous forme d'une galette mince ayant une épaisseur connue, des dimensions connues, et une densité connue ;
**Caractérisé par** les étapes consistant à :
(b) Mesurer la capacité calorifique effective dudit échantillon et générer un spectre de capacité calorifique effective ;
(c) Déterminer la capacité calorifique apparente en ajustant la valeur du spectre de capacité calorifique effective de l'étape b ;
(d) Déterminer la capacité calorifique spécifique dudit échantillon ;
(e) Déterminer le contact thermique effectif dudit échantillon ;
(f) Calculer la conductivité thermique du matériau en fonction d'au moins la capacité calorifique apparente dudit échantillon, le contact thermique effectif dudit échantillon, et la capacité calorifique spécifique dudit échantillon.

**2.** Procédé selon la revendication 1, **caractérisé en ce que** l'épaisseur dudit échantillon est égale ou inférieure à 1 mm environ.

**3.** Procédé selon la revendication 1, **caractérisé par** l'étape supplémentaire consistant à appliquer un composé dissipateur thermique audit échantillon.

**4.** Procédé selon la revendication 3, **caractérisé en ce que en ce que** ledit composé est de la graisse.

**5.** Procédé selon la revendication 1, **caractérisé en ce que** ledit échantillon est une galette en forme de disque circulaire.

**6.** Procédé selon la revendication 1, **caractérisé en ce que** ledit échantillon est un polymère.

**7.** Procédé selon la revendication 6, **caractérisé en ce que** ledit polymère comprend un matériau à faible conductivité thermique, cette conductivité thermique étant comprise entre 0,1 et 2 $W.m^{-1}.K^{-1}$.

**8.** Procédé selon la revendication 6, **caractérisé en ce que** ledit polymère est choisi parmi le groupe comprenant le polystyrène, le PMMA, la résine époxy 160, et la résine époxy 4173 et toute combinaison de ceux-ci.

**9.** Procédé selon la revendication 1, **caractérisé par** l'étape supplémentaire consistant à placer ledit échantillon dans une position d'échantillonnage d'un calorimètre différentiel à balayage.

10. Procédé selon la revendication 9, **caractérisé en ce que** l'étape de mesure de la capacité calorifique effective dudit échantillon utilisant ledit calorimètre différentiel à balayage comprend en outre l'étape de calcul d'un rapport entre l'amplitude du taux de flux calorifique et de l'amplitude du taux de chauffe.

11. Procédé selon la revendication 10, **caractérisé en outre par** l'utilisation de la transformée de Laplace pour générer un spectre de capacité calorifique.

12. Procédé selon la revendication 10, **caractérisé en ce que** en outre par l'utilisation de la transformée de Fourier pour générer un spectre de capacité calorifique.

13. Procédé selon la revendication 10, **caractérisé par** l'utilisation de la formule suivante :

$$C_{eff}(\omega) = \frac{A_{HF}}{A_q} = \frac{\sum_{i=1}^{n} HF_i \cos(\omega t_i) - i \sum_{i=1}^{n} HF_i \sin(\omega t_i)}{\sum_{i=1}^{n} q_i \cos(\omega t_i) - i \sum_{i=1}^{n} q_i \sin(\omega t_i)}$$

pour générer un spectre de capacité calorifique, où $C_{eff}(\omega)$ est la capacité calorifique effective et $A_{HF}$ est l'amplitude du taux de flux calorifique et Aq est l'amplitude du taux de chauffe.

14. Procédé selon la revendication 10, **caractérisé en ce que** la température subit au moins une variation suivie d'au moins un segment isotherme pour générer un spectre de capacité calorifique.

15. Procédé selon la revendication 1, **caractérisé en ce que** l'étape de détermination de la capacité calorifique apparente comprend une correction tenant compte du temps de réponse d'instrument.

16. Procédé selon la revendication 15, **caractérisé en ce que** l'étape de détermination de la capacité calorifique apparente comprend l'application de la formule suivante :

$$C_{app}(\omega) = C_{eff}(\omega) \cdot B_2(\omega)$$

où $C_{app}(\omega)$ est la capacité calorifique apparente à la fréquence $\omega$ et $B_2(\omega)$ est le facteur de calibrage dynamique de l'instrument.

17. Procédé selon la revendication 1, **caractérisé en ce que** l'étape de détermination de la capacité calorifique spécifique dudit échantillon comprend l'application de la formule suivante :

$$c_p = \frac{C_{eff}(0)}{m_s}$$

où $c_p$ est la capacité calorifique, $m_s$ est la masse de l'échantillon, et $C_{eff}(0)$ est calculé pour $\omega=0$.

18. Procédé selon la revendication 1, **caractérisé en ce que** l'étape de détermination du contact thermique effectif dudit échantillon comprend la description de $C_\alpha(\omega)$ sur une courbe pleine, cette courbe pleine étant en coordonnées polaires et dépend uniquement de la valeur de $C_\alpha(\omega=0)$, et où le contact thermique effectif dudit échantillon est alors la valeur à laquelle tous les points $C_\alpha(\omega_k)$ sont sur la courbe théorique.

**19.** Procédé selon la revendication 1, **caractérisé en ce que** l'étape de calcul de la conductivité thermique du matériau comprend l'application de la formule suivante :

$$C_\alpha(\omega) = -\frac{1}{i\omega}\kappa \cdot S \cdot \alpha \tanh(\alpha \cdot d)$$

où tous les paramètres mesurés sont connus à l'exception de la conductivité thermique k, et où la densité p peut être calculée à partir de la masse de l'échantillon et de ses dimensions, et où toute fréquence $\omega_k \neq 0$, et où l'augmentation de k conduit à un décalage de la position du point $C_\alpha(\omega_k)$ sur la courbe théorique, vers $C_\alpha(\omega=0)$.

**20.** Procédé selon la revendication 1, **caractérisé en ce que** l'étape de calcul de la conductivité thermique d'un échantillon est effectuée sur ordinateur.

**21.** Procédé selon la revendication 1, **caractérisé en ce que** l'étape de calcul de la conductivité thermique d'un échantillon est effectuée sur une feuille de calcul MS-Excel™ avec des macros Visual Basic™.

**22.** Procédé selon la revendication 1, **caractérisé en ce que** l'étape de mesure de la capacité calorifique effective dudit échantillon comprend la mesure de la capacité calorifique dudit échantillon avec au moins deux fréquences de modulation différentes, et où une seule mesure de la capacité calorifique effective dudit échantillon a été obtenue.

Fig 1  (a)

Fig. 1 (b)

EP 1 402 249 B1

Fig. 2a

Fig. 2b

Fig. 2c

Fig. 3

Fig. 4

Fig. 5

Fig. 6

Fig.7

Fig. 8 (a)

PS, $m_s$ = 32.9 mg, d = 1.03 mm

■ $c_\alpha(\omega)$, measured
○ $c_\alpha(\omega)$, calculated

$\kappa$ = 0.168 W m$^{-1}$ K$^{-1}$
K = 0.06 W K$^{-1}$

Im($c_p$) in J g$^{-1}$ K$^{-1}$

Re($c_p$) in J g$^{-1}$ K$^{-1}$

Fig. 8 (b)

PS, $m_s$ = 14 mg, d = 0.44 mm

■ $c_\alpha(\omega)$, measured
○ $c_\alpha(\omega)$, calculated

$\kappa$ = 0.17 W m$^{-1}$ K$^{-1}$
K = 0.11 W K$^{-1}$

Im($c_p$) in J g$^{-1}$ K$^{-1}$

Re($c_p$) in J g$^{-1}$ K$^{-1}$

Fig
9 (a)

PMMA, $m_s$ = 16.6 mg, d = 0.46 mm

■ $c_\alpha(\omega)$, measured
○ $c_\alpha(\omega)$, calculated

$\kappa$ = 0.212 W m$^{-1}$ K$^{-1}$
K = 0.08 W K$^{-1}$

Fig.
9 (b)

PMMA, $m_s$ = 38.3 mg, d = 1.052 mm

■ ▲ $c_\alpha(\omega)$, measured
□ △ $c_\alpha(\omega)$, calculated

$\kappa$ = 0.215 W m$^{-1}$ K$^{-1}$
■ K = 0.035 W K$^{-1}$
▲ K = 0.11 W K$^{-1}$

Fig. 10

Fig. 11(a)

Fig. 11(b)

PMMA, $m_s$ = 38.3 mg, d = 1.052 mm

■ $c_\alpha(\omega)$, measured

$\omega_7 - \omega_{10}$

Re($c_p$) in J g$^{-1}$ K$^{-1}$

Im($c_p$) in J g$^{-1}$ K$^{-1}$

Fig 12

Fig 13
(a)

PS, $m_s$ = 32.9 mg, d = 1.03 mm

$c_\alpha(\omega)$, measured
$c_\alpha(\omega)$, calculated

$\kappa$ = 0.16-0.18 W m$^{-1}$ K$^{-1}$
K = 0.07-0.1 W K$^{-1}$

Fig 13
(b)

PMMA, $m_s$ = 75 mg, d = 2.02 mm

$c_\alpha(\omega)$, measured
$c_\alpha(\omega)$, calculated

$\kappa$ = 0.2-0.24 W m$^{-1}$ K$^{-1}$
K = 0.04-0.06 W K$^{-1}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 53359931 B
- US 5335993 A
- US 5244775 A, Reading
- US 5439291 A, Reading

### Non-patent literature cited in the description

- **P. G. Knibbe.** *J. Phys. E: Sci. Instrum.,* 1987, vol. 20, 1205-1211
- **D. G. Cahill ; R. O. Pohl.** *Phys. Rev. B.,* 1987, vol. 35, 4067
- **D. G. Cahill.** *Rev. Sci. Instrum.,* 1990, vol. 61 (2), 802-808
- **J. H. Flynn ; D. M. Levin.** *Thermochimica Acta,* 1988, vol. 126, 93-100
- **T. Hashimoto ; Y. Matsui ; A. Hagiwara ; A. Miyamoto.** *Termochimica Acta,* 1990, vol. 163, 317-324
- **S.M. Marcus ; R. L. Blaine.** *Thermochimica Acta,* 1994, vol. 243, 231-239
- **S.L Simon ; G.B. McKenna.** *J. Reinforced Plastics Composites,* 1999, vol. 18, 559-571
- **S.L. Simon ; G.B. McKenna.** *J. Reinforced Plastics Composites,* 1999, vol. 18, 559-571